# EUROPEAN PATENT APPLICATION

(11) **EP 4 517 932 A1**
(43) Date of publication of application: **05.03.2025**
(21) Application number: 22956126.1
(22) Date of filing: 26.08.2022
(51) Int. Cl.: H01M 10/615, H01M 10/625, B60L 50/64

(54) **ELECTRIC DEVICE**

(71) Applicant: Contemporary Amperex Technology (Hong Kong) Limited, Hong Kong (HK)
(72) Inventor: LONG, Chao, Ningde, Fujian 352100 (CN); ZHANG, Wenhui, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2022/115155
(87) International publication number: WO 2024/040580

(57) **Abstract**

This application relates to an electric apparatus. The electric apparatus (200) includes an apparatus body (210) having a mounting space (A) and a battery pack (100) mounted in the mounting space (A). The battery pack (100) includes a box (10) and a battery cell (20), and the box (10) has an accommodating cavity (11) for accommodating the battery cell (20) and includes a bearing member (12) for defining the accommodating cavity (11). One side of the bearing member (12) is configured to be connected to the battery cell (20), and the other side of the bearing member (12) back away from the side faces the inside of the mounting space (A) and a thermal insulation layer (220) is provided between the other side and an inner wall of the mounting space (A). The bearing member (12) on the box (10) for connecting the battery cell (20) is disposed facing a floor (400), such that the bearing member (12) is no longer exposed to the outside, which prevents heat of the battery pack (100) from dissipating directly to the outside through the bearing member (12). In addition, the thermal insulation layer (220) is provided on the side of the bearing member (12) facing the mounting space (A). Through the thermal insulation layer (220), thermal insulation performance can be improved, thereby reducing power consumption and improving endurance.

## Description

### TECHNICAL FIELD

This application relates to the field of battery production technologies, and in particular, to an electric apparatus.

### BACKGROUND

With the advancement of science and technology, an increasing number of electric apparatuses are produced for use in daily life and work. People need mobile phones for communication, computers for work, and electric vehicles for transportation. These electric apparatuses such as mobile phones, computers, and electric vehicles all need battery packs to function.

Endurance of battery packs has become the focus of attention. However, battery packs are sensitive to the operating temperature. Especially during operation in winter, the heat of the battery is prone to dissipating directly to the outside, which results in poor thermal insulation performance of the battery pack, thereby leading to increased power consumption and accordingly decreased endurance.

### SUMMARY

**In** view of the foregoing problem, this application provides an electric apparatus, so as to alleviate the problem of increased power consumption and accordingly decreased endurance caused by poor thermal insulation performance of a battery pack due to heat of the battery pack being prone to dissipating directly to the outside.

According to a first aspect, this application provides an electric apparatus, including:
an apparatus body having a mounting space; and
a battery pack mounted in the mounting space, where the battery pack includes a box and a battery cell, and the box has an accommodating cavity for accommodating the battery cell and includes a bearing member for defining the accommodating cavity;
where one side of the bearing member is configured to be connected to the battery cell, and the other side of the bearing member back away from the side faces the inside of the mounting space and a thermal insulation layer is provided between the other side and an inner wall of the mounting space.

In the technical solutions in the embodiments of the application, the bearing member on the box for connecting the battery cell is disposed facing a floor, such that the bearing member is no longer exposed to the outside, which prevents heat of the battery pack from dissipating directly to the outside through the bearing member. In addition, the thermal insulation layer is provided on the side of the bearing member facing the mounting space. Through the thermal insulation layer, thermal insulation performance can be improved, thereby reducing power consumption and improving endurance.

In some embodiments, the battery cell is suspended from the bearing member. The battery cell being suspended from the bearing member can simplify the fixing of the battery cell relative to the bearing member, and allows for convenient provision of the bearing member facing the mounting space. In addition, when the battery pack needs to be maintained, the battery cell can be exposed only by removing a cover body on a side opposite the bearing member, with no need to disassemble the bearing member, thereby facilitating maintenance of the battery pack. In addition, during maintenance of the battery pack, the battery cell can be disassembled from and assembled onto the bearing member from below, thereby facilitating maintenance of the battery pack.

In some embodiments, an outer surface of the battery cell facing the bearing member is a first outer surface, and the battery cell includes an electrode terminal, the electrode terminal being arranged on an outer surface of the battery cell other than the first outer surface. In addition to the battery cells, the battery pack is generally provided with components such as a sampling wire harness and high-voltage wire harnesses for electrically connecting the battery cells and a protective structure for protecting the battery cells. In this case, the electrode terminal is arranged on other surfaces of the battery cell than the first outer surface, such that when arranged on the electrode terminal, the components such as a sampling wire harness, a high-voltage wire harness, and a protective structure can be arranged in the space between the battery cells and other structures of the box than the bearing member without being limited by the bearing member, facilitating arrangement of the components. Moreover, because the first outer surface is a smooth surface, the first outer surface can be fitted to the bearing member, such that the battery cell can be fittingly mounted to the bearing member, with no need to reserve space between the battery cell and the bearing member, helping to improve space utilization of the battery pack.

In some embodiments, the battery cell has a second outer surface back away from the first outer surface, and the electrode terminal is arranged on the second outer surface. With the electrode terminal arranged on the second outer surface, when the battery pack needs to be maintained, the electrode terminal of the battery cell and the components such as a sampling wire harness, a high-voltage wire harness, and a busbar on the electrode terminal can be exposed only by removing a cover body on a side opposite the bearing member, thereby facilitating maintenance.

In some embodiments, the battery cell is adhered to the bearing member. The battery cell being adhered to the bearing member not only facilitates connection but also simplifies the structure of the battery pack.

In some embodiments, the thermal insulation layer includes a closed first thermal insulation space enclosed by the bearing member and the inner wall of the mounting space. The first thermal insulation space being provided as a closed space prevents air convection in the space, thereby reducing heat loss caused by convection and greatly improving the thermal insulation performance.

In some embodiments, gas is sealed in the first thermal insulation space. Gas is sealed in the first thermal insulation space for thermal insulation, such that heat of the bearing member can reach the outside only through an air layer, reducing the heat transfer effect, thereby improving the thermal insulation performance.

In some embodiments, the thermal insulation layer includes an open first thermal insulation space enclosed by the bearing member and the inner wall of the mounting space, and a heat exchange medium circulates in the first thermal insulation space. The heat exchange medium is provided for thermal insulation of the bearing member, such that temperature of the bearing member can be adjusted, so as to achieve a better thermal insulation effect.

In some embodiments, the thermal insulation layer includes a first thermal insulation material layer. The first thermal insulation material layer made of a thermal insulation material has stable thermal insulation performance, significantly slowing down the rate at which heat of the bearing member dissipates to the outside, thereby resulting in good thermal insulation performance.

In some embodiments, a side of the battery cell back away from the bearing member is spaced apart from a corresponding inner wall of the accommodating cavity to form a second thermal insulation space. The side of the battery cell back away from the bearing member is generally in direct contact with the outside air, so heat loss is most likely to occur herein. The second thermal insulation space being provided can mitigate dissipation of heat of the battery cell to the outside through the side of the battery cell back away from the bearing member, thereby improving the thermal insulation performance of the battery pack.

In some embodiments, gas is sealed in the second thermal insulation space, and/or
Gas is sealed in the second thermal insulation space for thermal insulation, such that heat of the battery cell can reach the outside only through an air layer, reducing the heat transfer effect, thereby improving the thermal insulation performance. The second thermal insulation material layer made of a thermal insulation material has stable thermal insulation performance, significantly slowing down the rate at which heat of the battery cell dissipates to the outside, thereby resulting in good thermal insulation performance.

In some embodiments, an outer surface of the battery cell facing the bearing member is a first outer surface, the battery cell further has a third outer surface adjacent to the first outer surface, and at least a portion of the third outer surface is spaced apart from a corresponding inner wall of the box to form a third thermal insulation space. The third thermal insulation space being provided can mitigate dissipation of heat of the battery cell to the outside through the side of the battery cell back away from the bearing member, thereby improving the thermal insulation performance of the battery pack.

In some embodiments, gas is sealed in the third thermal insulation space, and/or
a third thermal insulation material layer is provided in the third thermal insulation space. Gas is sealed in the third thermal insulation space for thermal insulation, such that heat of the battery cell can reach the outside only through an air layer, reducing the heat transfer effect, thereby improving the thermal insulation performance. The third thermal insulation material layer made of a thermal insulation material has stable thermal insulation performance, significantly slowing down the rate at which heat of the battery cell dissipates to the outside, thereby resulting in good thermal insulation performance.

In some embodiments, the box includes a bottom cover and a frame, the frame encloses a cavity with two ends open, the bottom cover and the bearing member cover the two opposite ends of the cavity respectively, and the bottom cover, the frame, and the bearing member together enclose the accommodating cavity. With the frame as a foundation, the accommodating cavity of the battery pack can be formed by connecting the bearing member and the bottom cover to the two opposite ends of the frame respectively, simplifying the structure of the box.

In some embodiments, the frame includes a frame body and a flange, the frame body encloses the cavity, and the flange is connected to the periphery of the frame body and connected to the apparatus body. With the flange provided on the frame and connected to the apparatus body, the connection process can be simplified, improving the connection efficiency.

In some embodiments, in an axial direction parallel to the frame, the flange and the bearing member are spaced apart, and the bearing member is deeper into the accommodating space than the flange. The bearing member is deeper into the mounting space than the flange, so the bearing member is not limited by the mounting of the battery pack relative to the apparatus body, and can be deeper into the mounting space, thereby avoiding heat dissipation.

In some embodiments, at least a portion of the bottom cover is disposed outside the mounting space. A portion of the bottom cover being disposed outside the mounting space can facilitate subsequent maintenance and disassembly of the battery pack, making maintenance more convenient.

In some embodiments, the electric apparatus is a vehicle, the apparatus body is a vehicle body of the vehicle, the vehicle body includes a floor for defining the mounting space, and the thermal insulation layer is provided between the bearing member and the floor. The battery pack being mounted on the lower side of the floor of the vehicle body and the thermal insulation layer being provided between the bearing member and the floor can prevent heat of the bearing member from dissipating from the bottommost portion of the vehicle body.

In some embodiments, the vehicle has an air conditioning system, the air conditioning system being configured to provide a refrigerant for the thermal insulation layer. The refrigerant is used for thermal insulation of the bearing member. The refrigerant can heat or cool the bearing member, so temperature of the battery pack can be adjusted by heating or cooling the bearing member to achieve the thermal insulation effect. In addition, this improves the energy utilization efficiency of the refrigerant, and allows the battery pack to operate at an appropriate temperature, ensuring its use performance and prolonging its service life.

In some embodiments, the vehicle body further includes a first beam body and a second beam body disposed opposite and spaced apart from each other, and the first beam body and the second beam body are disposed on one side of the floor and enclose the mounting space together with the floor. Due to high structural strength, the first beam body and the second beam body can withstand an external force, thereby avoiding damage to the battery pack.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. In the accompanying drawings:
FIG. 1 is a schematic structural diagram of a vehicle according to an embodiment of this application;
FIG. 2 is a schematic structural exploded view of a battery cell according to an embodiment of this application;
FIG. 3 is a schematic structural cross-sectional view of a partial structure of an electric apparatus according to an embodiment of this application; and
FIG. 4 is a schematic structural exploded view of a battery pack in the electric apparatus shown in FIG. 3.

### Description of reference signs:

vehicle 1000;
battery pack 100;
box 10;
accommodating cavity 11; bearing member 12; bottom cover 13; frame 14; frame body 141; flange 142; mounting opening 15;
battery cell 20;
end cover 21; electrode terminal 211; first outer surface 212; second outer surface 213; third outer surface 214; housing 22; electrode assembly 23; tab 231;
electric apparatus 200;
apparatus body 210;
thermal insulation layer 220;
vehicle body 300;
floor 400;
first beam body 500;
second beam body 600;
mounting space A;
second thermal insulation space B;
third thermal insulation space C; and
connecting space D.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of the descriptions of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

In recent years, with the continuous development of new energy vehicle technology and the sustained increase in the number of holdings of new energy vehicles, the development of electric apparatuses such as electric vehicles in battery pack technology has been rapidly promoted.

The applicant has found that a conventional battery pack is typically disposed on a chassis of a vehicle and specifically fixed on a floor of the vehicle, a plurality of battery units are accommodated in the battery pack, and the plurality of battery units are all fixed on a bearing member of the battery pack.

The bearing member is typically located at the lower portion of the battery pack without blocking from other components, so the bearing member is in direct contact with air outside the vehicle, which allows heat of the battery pack to be prone to dissipating directly to the outside through the bearing member. In addition, during driving of the vehicle, air convection further accelerates heat dissipation, resulting in poor thermal insulation performance of the battery pack.

The battery pack typically has good operating performance between 15°C and 35°C. When operating temperature is lower than 15°C, energy storage and power output efficiency significantly decrease. This greatly increases power consumption, resulting in shortened driving mileage, reduced power performance, and shortened service life. In addition, especially for a lithium battery, during charging at low temperature, lithium is easily released from the electrolyte, leading to irreversible energy loss of the battery, and the released lithium may pass through the separator, causing safety accidents.

To alleviate the problem of poor thermal insulation performance of the battery pack caused by heat dissipation of the bearing member, the applicant, through research, has designed an electric apparatus, including an apparatus body and a battery pack. The apparatus body has a mounting space, and the battery pack is mounted in the mounting space, where the battery pack includes a box and a battery cell, and the box has an accommodating cavity for accommodating the battery cell and includes a bearing member for defining the accommodating cavity. One side of the bearing member is configured to be connected to the battery cell, and the other side of the bearing member back away from the side faces the inside of the mounting space and a thermal insulation layer is provided between the other side and an inner wall of the mounting space.

In such an electric apparatus, the bearing member on the box for connecting the battery cell is disposed facing the inside of the mounting space, such that the bearing member is no longer exposed to the outside, which prevents heat of the battery pack from dissipating directly to the outside through the bearing member. In addition, the thermal insulation layer is provided between the side of the bearing member facing the mounting space and the inner wall of the mounting space. Through the thermal insulation layer, thermal insulation performance can be greatly improved, thereby reducing power consumption and improving endurance.

An embodiment of this application provides an electric apparatus that uses a battery as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

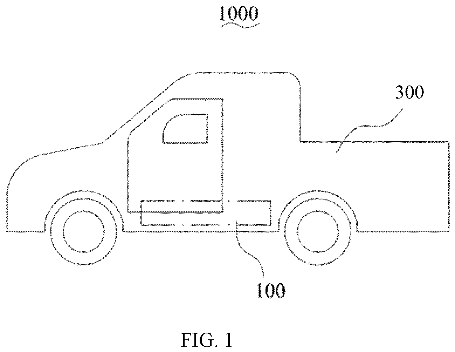

Referring to FIG. 1, FIG. 1 is a schematic structural diagram of the vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery pack 100 inside, where the battery pack 100 may be disposed at the bottom, front, or rear of the vehicle 1000. The battery pack 100 may be configured to supply power to the vehicle 1000. For example, the battery pack 100 may be used as an operational power source for the vehicle 1000. The vehicle 1000 may further include a controller and a motor, where the controller is configured to control the battery pack 100 to supply power to the motor, for example, to satisfy power needs of start, navigation, and driving of the vehicle 1000.

In some embodiments of this application, the battery pack 100 can be used as not only the operational power source for the vehicle 1000 but also a driving power source for the vehicle 1000, replacing or partially replacing fossil fuel or natural gas to provide driving traction for the vehicle 1000.

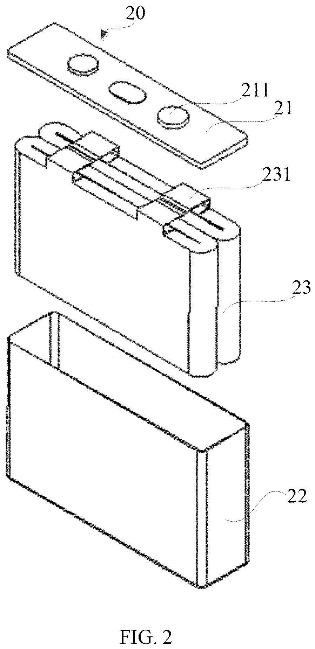

Referring to FIG. 2, FIG. 2 is an exploded view of a battery pack 100 according to some embodiments of this application. The battery pack 100 includes a box 10 and a battery cell 20, where the battery cell 20 is accommodated in the box 10. The box 10 is configured to provide an accommodating space for the battery cell 20. The box 10 may be of various shapes, such as cylinder or cuboid.

In the battery pack 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery pack 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery pack 100 may further include other structures. For example, the battery pack 100 may further include a busbar configured to implement electrical connection between the plurality of battery cells 20. Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

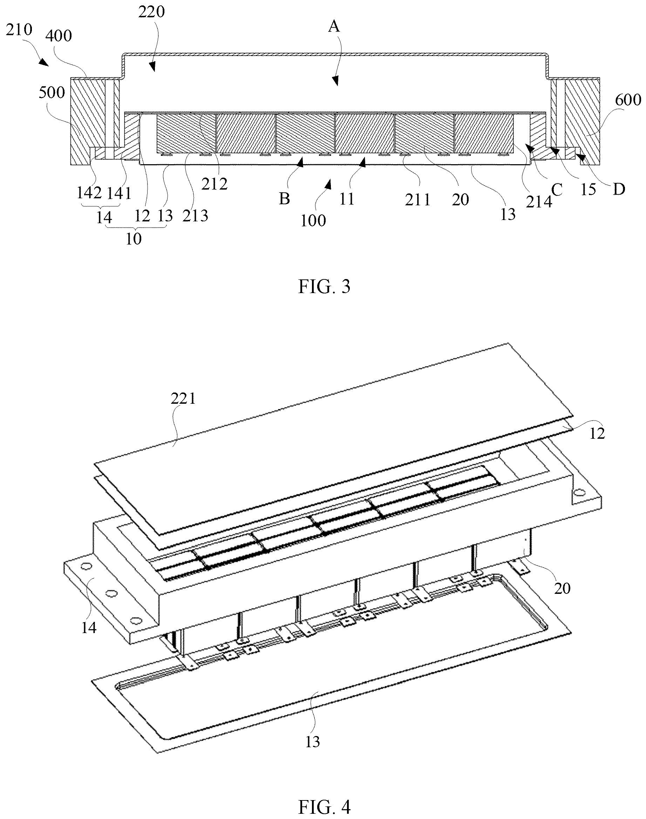

The battery cell 20 is a smallest unit constituting a battery. As shown in FIG. 3, the battery cell 20 includes an end cover 21, a housing 22, an electrode assembly 23, and other functional components.

The end cover 21 is a component that covers an opening of the housing 22 to isolate an internal environment of the battery cell 20 from an external environment. Without limitation, shape of the end cover 21 may be adapted to shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. Functional components such as an electrode terminal 211 may be provided on the end cover 21. The electrode terminal 211 may be configured to be electrically connected to the electrode assembly 23 for outputting or inputting electrical energy of the battery cell 20. In some embodiments, the end cover 21 may be further provided with a pressure relief mechanism for releasing internal pressure when the internal pressure or temperature of the battery cell 20 reaches a threshold. The end cover 21 may alternatively be made of various materials, such as copper, iron, aluminum, stainless steel, aluminum alloy, and plastic, which are not particularly limited in the embodiments of this application. In some embodiments, an insulator may also be provided at an inner side of the end cover 21. The insulator may be configured to insulate an electrical connection component in the housing 22 from the end cover 21 to reduce the risk of short circuit. For example, the insulator may be made of plastic, rubber, or the like.

The housing 22 is an assembly configured to form an internal environment of the battery cell 20 by fitting with the end cover 21, where the formed internal environment may be used to accommodate the electrode assembly 23, the electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may alternatively be integrated. Specifically, the end cover 21 and the housing 22 may form a shared connection surface before other components are disposed inside the housing, and then the housing 22 is covered with the end cover 21 when the inside of the housing 22 needs to be enclosed. The housing 22 may be of various shapes and sizes, such as a cuboid shape, a cylindrical shape, and a hexagonal prism shape. Specifically, the shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Portions of the positive electrode plate and the negative electrode plate with active substances constitute an apparatus body portion of the electrode assembly, while portions of the positive electrode plate and the negative electrode plate without active substances separately constitute a tab 231. A positive tab and a negative tab may both be located at one end of the apparatus body portion or be located at two ends of the apparatus body portion respectively. During charging and discharging of the battery, a positive electrode active substance and a negative electrode active substance react with the electrolyte, and the tabs 231 are connected to the electrode terminals to form a current loop.

According to some embodiments of this application, referring to FIG. 3, FIG. 3 is a schematic structural cross-sectional view of a partial structure of an electric apparatus according to some embodiments of this application, and FIG. 4 is a schematic structural exploded view of a battery pack in the electric apparatus shown in FIG. 3. Referring to FIG. 4 and FIG. 5, this application provides an electric apparatus 200. The electric apparatus 200 includes an apparatus body 210 and a battery pack 100. The apparatus body 210 has a mounting space A, and the battery pack 100 is mounted in the mounting space A. The battery pack 100 includes a box 10 and a battery cell 20, and the box 10 has an accommodating cavity 11 for accommodating the battery cell 20 and includes a bearing member 12 for defining the accommodating cavity 11. One side of the bearing member 12 is configured to be connected to the battery cell 20, and the other side of the bearing member 12 back away from the side faces the inside of the mounting space A and a thermal insulation layer 220 is provided between the other side and an inner wall of the mounting space A.

The apparatus body 210 refers to a structure that implements main functions of the electric apparatus 200. Specifically, when the electric apparatus 200 is a vehicle, the apparatus body 210 is a vehicle body.

The mounting space A refers to an accommodating space, and components to be mounted may be partially or completely disposed in the mounting space A. Therefore, the battery pack 100 being mounted in the mounting space A means that the battery pack 100 may be partially or completely disposed in the mounting space A, which is not specifically limited.

The mounting space A may specifically be enclosed by at least two portions or be formed on one component, which is not specifically limited. In addition, the apparatus body 210 has the mounting space A, and may also have a mounting opening 212 communicating with the mounting space A, where the mounting opening 212 may be provided in only one or plurality, which is not specifically limited. In the embodiments of this application, the mounting opening 212 is provided in one, and the battery pack 100 is mounted in the mounting space A through the mounting opening 212.

The bearing member 12 is a component that can bear weight of the battery cell 20, and may be a bearing member, a bearing rod, a bearing block, a bearing sheet, a bearing frame, a bearing rope, or the like, which is not specifically limited. Specifically, the battery cell 20 may be supported on the bearing member 12, and in this case, the battery cell 20 may be disposed above the bearing member 12. Specifically, the battery cell 20 may alternatively be suspended from the bearing member 12, and in this case, the battery cell 20 may be disposed below the bearing member 12 or on the side of the bearing member 12.

The thermal insulation layer 220 is provided between the side of the bearing member 12 and the inner wall of the mounting space A. The thermal insulation layer 220 is not limited to a specific form, and may be a structural layer, a space layer, or a combination of a structural layer and a space layer, which is not specifically limited.

The bearing member 12 on the box 10 for connecting the battery cell 20 is disposed facing a floor 400, such that the bearing member 12 is no longer exposed to the outside, which prevents heat of the battery pack 100 from dissipating directly to the outside through the bearing member 12. In addition, the thermal insulation layer 220 is provided on the side of the bearing member 12 facing the mounting space A. Through the thermal insulation layer 220, thermal insulation performance can be improved, thereby reducing power consumption and improving endurance.

Optionally, when the battery cell 20 in the battery pack 100 is provided in plurality, all the battery cells 20 may be connected to the bearing member.

According to some embodiments of this application, referring to FIG. 3 and FIG. 4, the battery cell 20 is suspended from the bearing member 12.

The battery cell 20 being suspended from the bearing member 12 means that the battery cell 20 is disposed below the bearing member 1, and the bearing member 12 bears the weight of the battery cell 20. The method for suspending the battery cell 20 from the bearing member 12 includes: the battery cell 20 is directly adhered to a lower surface of the bearing member 12, the battery cell 20 is connected below the bearing member 12 by fasteners, the battery cell 20 is suspended from the bearing member 12 by hooks or the like and located below the bearing member 12, and the like.

In this way, the battery cell 20 being suspended from the bearing member 12 can simplify the fixing of the battery cell 20 relative to the bearing member 12, and allows for convenient provision of the bearing member 12 facing the mounting space A. In addition, when the battery pack 100 needs to be maintained, the battery cell 20 can be exposed only by removing a cover body on a side opposite the bearing member 12, with no need to disassemble the bearing member 12, thereby facilitating maintenance of the battery pack 100. In addition, during maintenance of the battery pack 100, the battery cell 20 can be disassembled from and assembled onto the bearing member 12 from below, thereby facilitating maintenance of the battery pack 100.

According to some embodiments of this application, referring to FIG. 3 and FIG. 4, an outer surface of the battery cell 20 facing the bearing member 12 is a first outer surface 212, and the battery cell 20 includes an electrode terminal 211, the electrode terminal 211 being arranged on an outer surface of the battery cell 20 other than the first outer surface 212.

The electrode terminal 211 is arranged on the outer surface of the battery cell 20 other than the first outer surface 212. The first outer surface 212 faces the bearing member 12, and is typically a smooth surface on which no structures such as the electrode terminal 211 and an electrolyte injection hole protrude or are recessed. When the battery cell 20 is suspended from the bearing member 12, the first outer surface 212 is an upward outer surface of the battery cell 20. Specifically, in an embodiment, the battery cell 20 includes the housing 22 and the end cover 21 described above, and the housing 22 and the end cover 21 form the internal environment of the battery cell 20 for accommodating the electrode assembly 23. The end cover 21 is located at one end of the housing 22, and the electrode terminal 211 is arranged on the end cover 21. In this case, any one of the outer surfaces of the housing 22 can be used as the first outer surface 212 of the battery cell 20.

The electrode terminal 211 includes a positive electrode terminal and a negative electrode terminal, where the positive electrode terminal is configured to be electrically connected to the positive electrode plate in the electrode assembly 23, and the negative electrode terminal is configured to be electrically connected to the negative electrode plate in the electrode assembly 23. It should be noted that the positive electrode terminal and the negative electrode terminal may be arranged on a same outer surface of the battery cell 20 (for example, a prismatic battery cell 20) or on two different outer surfaces of the battery cell 20 (for example, a cylindrical battery cell 20). When the positive electrode terminal and the negative electrode terminal are arranged on two different outer surfaces of the battery cell 20, the first outer surface 212 is a surface of the battery cell 20 that is different from the two outer surfaces.

In addition to the battery cells 20, the battery pack 100 is generally provided with components such as a sampling wire harness and high-voltage wire harnesses for electrically connecting the battery cells 20 and a protective structure for protecting the battery cells 20. In this case, the electrode terminal 211 is arranged on other surfaces of the battery cell 20 than the first outer surface 212, such that when arranged on the electrode terminal 211, the components such as a sampling wire harness, a high-voltage wire harness, and a protective structure can be arranged in the space between the battery cells 20 and other structures of the box 10 than the bearing member 12 without being limited by the bearing member 12, facilitating arrangement of the components. Moreover, because the first outer surface 212 is a smooth surface, the first outer surface 212 can be fitted to the bearing member 12, such that the battery cell 20 can be fittingly mounted to the bearing member 12, with no need to reserve space between the battery cell 20 and the bearing member 12, helping to improve space utilization of the battery pack 100.

According to some embodiments of this application, referring to FIG. 3 and FIG. 4, the battery cell 20 has a second outer surface 213 back away from the first outer surface 212, and the electrode terminal 211 is arranged on the second outer surface 213.

The second outer surface 213 is an outer surface of the battery cell 20 back away from the first outer surface 212. When the battery cell 20 is suspended from the bearing member 12, the second outer surface 212 faces a surface of the box 10 opposite the bearing member 12.

With the electrode terminal 211 arranged on the second outer surface 213, when the battery pack 100 needs to be maintained, the electrode terminal 211 of the battery cell 20 and the components such as a sampling wire harness, a high-voltage wire harness, and a busbar on the electrode terminal 211 can be exposed only by removing a cover body on a side opposite the bearing member 12, thereby facilitating maintenance.

Certainly, in other embodiments, the electrode terminal 211 may alternatively be arranged on a third outer surface intersecting with the first outer surface 212 in the battery cell 20.

According to some embodiments of this application, referring to FIG. 3 and FIG. 4, the battery cell 20 is adhered to the bearing member 12.

Specifically, the battery cell 20 can be adhered to the bearing member 12 by an adhesive such as an epoxy resin adhesive and an acrylate adhesive, which is not specifically limited. In this case, the battery cell 20 being adhered to the bearing member 12 not only facilitates connection but also simplifies the structure of the battery pack 100.

According to some embodiments of this application, referring to FIG. 3 and FIG. 4, the thermal insulation layer 220 includes a closed first thermal insulation space enclosed by the bearing member 12 and the inner wall of the mounting space A.

The first thermal insulation space being provided as a closed space prevents air convection in the space, thereby reducing heat loss caused by convection and greatly improving the thermal insulation performance.

According to some embodiments of this application, referring to FIG. 3 and FIG. 4, gas is sealed in the first thermal insulation space.

Gas is sealed in the first thermal insulation space for thermal insulation, such that heat of the bearing member 12 can reach the outside only through an air layer, reducing the heat transfer effect, thereby improving the thermal insulation performance.

Optionally, thermal insulation can be achieved only by sealing air in the first thermal insulation space, or other thermal insulation structures, such as the following first thermal insulation material layer, can be provided in the first thermal insulation space to further improve the thermal insulation effect, which is not specifically limited.

According to some embodiments of this application, referring to FIG. 3 and FIG. 4, the thermal insulation layer 220 includes an open first thermal insulation space enclosed by the bearing member 12 and the inner wall of the mounting space A, and a heat exchange medium circulates in the first thermal insulation space.

The open first thermal insulation space means that the first thermal insulation space is not closed and can communicate with the outside. Specifically, the body 210 may have a communication channel communicating with the first thermal insulation space.

The heat exchange medium refers to a medium that has a heat exchange function and can exchange heat with the bearing member 12. Specifically, the medium may be liquid or gas, and more specifically, the heat exchange medium may be cooling water, saturated steam, exhaust gas, or the like, which is not specifically limited.

The heat exchange medium is provided for thermal insulation of the bearing member 12, such that temperature of the bearing member 12 can be adjusted, so as to achieve a better thermal insulation effect.

According to some embodiments of this application, referring to FIG. 3 and FIG. 4, the thermal insulation layer 220 includes a first thermal insulation material layer 221.

The thermal insulation material layer refers to a thermal insulation layer made of a thermal insulation material.

The first thermal insulation material layer 221 made of a thermal insulation material has stable thermal insulation performance, significantly slowing down the rate at which heat of the bearing member 12 dissipates to the outside, thereby resulting in good thermal insulation performance.

Specifically, the first thermal insulation material layer 221 may be a thermal insulation cotton layer or the like, which is not specifically limited.

Optionally, the first thermal insulation material layer 221 is connected to a side of the bearing member 12 back away from the battery cell 20.

According to some embodiments of this application, referring to FIG. 3 and FIG. 4, a side of the battery cell 20 back away from the bearing member 12 is spaced apart from an inner wall of the accommodating cavity 11 to form a second thermal insulation space B.

The side of the battery cell 20 back away from the bearing member 12 is generally in direct contact with the outside air, so heat loss is most likely to occur herein. The second thermal insulation space B being provided can mitigate dissipation of heat of the battery cell 20 to the outside through the side of the battery cell 20 back away from the bearing member 12, thereby improving the thermal insulation performance of the battery pack 100.

Specifically, the second outer surface 213 of the battery cell 20 is spaced apart from the inner wall of the accommodating cavity 11 to form the second thermal insulation space B.

According to some embodiments of this application, referring to FIG. 3 and FIG. 4, gas is sealed in the second thermal insulation space B.

Gas is sealed in the second thermal insulation space B for thermal insulation, such that heat of the battery cell 20 can reach the outside only through an air layer, reducing the heat transfer effect, thereby improving the thermal insulation performance.

According to some embodiments of this application, referring to FIG. 3 and FIG. 4, a second thermal insulation material layer is provided in the second thermal insulation space B.

The second thermal insulation material layer made of a thermal insulation material has stable thermal insulation performance, significantly slowing down the rate at which heat of the battery cell 20 dissipates to the outside, thereby resulting in good thermal insulation performance.

Specifically, the second thermal insulation material layer may be a thermal insulation cotton layer or the like, which is not specifically limited.

According to some embodiments of this application, referring to FIG. 3 and FIG. 4, gas is sealed in the second thermal insulation space B, and a second thermal insulation material layer is provided in the second thermal insulation space B.

Gas is sealed in the second thermal insulation space B for thermal insulation, such that heat of the battery cell 20 can reach the outside only through an air layer, reducing the heat transfer effect, thereby improving the thermal insulation performance. The second thermal insulation material layer made of a thermal insulation material has stable thermal insulation performance, significantly slowing down the rate at which heat of the battery cell 20 dissipates to the outside, thereby resulting in good thermal insulation performance.

According to some embodiments of this application, referring to FIG. 3 and FIG. 4, an outer surface of the battery cell 20 facing the bearing member 12 is a first outer surface 212, the battery cell 20 further has a third outer surface 213 adjacent to the first outer surface 212, and at least a portion of the third outer surface 213 is spaced apart from a corresponding inner wall of the box 10 to form a third thermal insulation space C.

The third outer surface 213 is located between the first outer surface 212 and the second outer surface 213, and is of a ring shape. When the battery cell 20 is a prismatic battery cell, the third outer surface 213 is of a prismatic ring shape. When the battery cell 20 is a cylindrical battery cell, the third outer surface 213 is of a circular ring shape.

The third outer surface 213 may be only partially spaced apart from the corresponding inner wall of the box 10 to form the third thermal insulation space C, or may be entirely spaced apart from the corresponding inner wall of the box 10 to form the third thermal insulation space C.

The third thermal insulation space C being provided can mitigate dissipation of heat of the battery cell 20 to the outside through the side of the battery cell 20 back away from the bearing member 12, thereby improving the thermal insulation performance of the battery pack 100.

According to some embodiments of this application, referring to FIG. 3 and FIG. 4, gas is sealed in the third thermal insulation space C.

Gas is sealed in the third thermal insulation space C for thermal insulation, such that heat of the battery cell 20 can reach the outside only through an air layer, reducing the heat transfer effect, thereby improving the thermal insulation performance.

According to some embodiments of this application, referring to FIG. 3 and FIG. 4, a third thermal insulation material layer is provided in the third thermal insulation space C.

The third thermal insulation material layer made of a thermal insulation material has stable thermal insulation performance, significantly slowing down the rate at which heat of the battery cell 20 dissipates to the outside, thereby resulting in good thermal insulation performance.

Specifically, the third thermal insulation material layer may be a thermal insulation cotton layer or the like, which is not specifically limited.

According to some embodiments of this application, referring to FIG. 3 and FIG. 4, gas is sealed in the third thermal insulation space C, and a third thermal insulation material layer is provided in the third thermal insulation space C.

Gas is sealed in the third thermal insulation space C for thermal insulation, such that heat of the battery cell 20 can reach the outside only through an air layer, reducing the heat transfer effect, thereby improving the thermal insulation performance. The third thermal insulation material layer made of a thermal insulation material has stable thermal insulation performance, significantly slowing down the rate at which heat of the battery cell 20 dissipates to the outside, thereby resulting in good thermal insulation performance.

According to some embodiments of this application, referring to FIG. 3 and FIG. 4, the box 10 includes a bottom cover 13 and a frame 14, the frame 14 encloses a cavity with two ends open, the bottom cover 13 and the bearing member 12 cover the two opposite ends of the cavity respectively, and the bottom cover 13, the frame 14, and the bearing member 12 together enclose the accommodating cavity 11.

With the frame 14 as a foundation, the accommodating cavity 11 of the battery pack 100 can be formed by connecting the bearing member 12 and the bottom cover 13 to the two opposite ends of the frame 14 respectively, simplifying the structure of the box 10.

Optionally, the frame 14, the bearing member 12, and the bottom cover 13 may be made of the same material, for example, aluminum alloy, copper alloy, steel, or plastic. Certainly, the frame 14, the bearing member 12, and the bottom cover 13 may alternatively be made of different materials, which is not specifically limited. For an orthographic projection in a vertical direction, the frame 14 may be rectangular, circular, polygonal, or the like, which is not specifically limited.

The bottom cover 13 may be a hollow structure with an opening at one side and may have a first space itself. The first space of the bottom cover 13 and a second space enclosed by the bearing member 12 and the frame 14 integrally form the accommodating cavity 11. The bottom cover 13 itself may not have a space for forming the accommodating cavity 11. For example, the bottom cover 13 may be a flat plate structure. Certainly, the accommodating cavity s of the box 10 may alternatively be formed by a portion of the second space. In this case, the bottom cover 13 can cover the opening of the second space and be recessed toward the second space to occupy a portion of the second space, and the second space, excluding the portion occupied by the bottom cover 13, forms the accommodating cavity 11 of the box 10.

The bottom cover 13 and the frame 14 may be fixed by welding, hot melting, adhering, fastening, snap-fitting, or the like. Fastening refers to a connection achieved through fasteners, and the fasteners include components such as bolts, latches, rivets, pins, and screws. Snap-fitting refers to a fixation achieved through a snap-fit structure. For example, the bottom cover 13 has hooks and the frame 14 has slots, and the hooks are snap-fitted into the slots to achieve the snap-fitting fixation between the bottom cover 13 and the frame 14. Certainly, the connection manner between the bottom cover 13 and the frame 14 is not limited thereto, and is not exhaustively listed in this application.

Optionally, the bottom cover 13 is detachably connected to the frame 14.

The bottom cover 13 being detachably connected to the frame 14 means that when the bottom cover 13 is connected to the frame 14, the bottom cover 13, relative to the frame 14, has a first state in which it is completely connected to the frame 14 and forms the accommodating cavity 11 together with the bearing member 12, and has a second state in which it is not completely connected to or separated from the frame 14 to expose the battery cell 20. The bottom cover 13, under the operation of an external force, can be switched from the first state to the second state and from the second state to the first state, without damaging any parts in this process.

When the bottom cover 13 is in the first state, it, together with the frame 14 and the bearing member 12, forms the accommodating cavity 11 which can protect the battery cell 20. When the bottom cover 13 is in the second state, the body of the battery pack 100 is exposed, making it convenient for relevant personnel to maintain or replace the battery cell 20.

Optionally, the bearing member 12 and the frame 14 may be fixed by welding, hot melting, adhering, fastening, snap-fitting, or integral forming. Integral forming means that two components are manufactured simultaneously during forming to form an integral structure. Specifically, the bearing member 12 and the frame 14 may be integrally formed by casting, which is not specifically limited.

According to some embodiments of this application, referring to FIG. 3 and FIG. 4, the frame 14 includes a frame body 141 and a flange 142, the frame body 141 encloses the cavity, and the flange 142 is connected to the periphery of the frame body 141 and connected to the apparatus body 10.

The flange 142 is connected to the periphery of the frame body 141 and should protrude, in a radial direction of the frame body 141, from the peripheral surface of the frame body 141 in a direction leaving the frame body 141.

With the flange 142 provided on the frame 14 and connected to the apparatus body 10, the connection process can be simplified, improving the connection efficiency.

According to some embodiments of this application, referring to FIG. 3 and FIG. 4, in an axial direction parallel to the frame 14, the flange 142 and the bearing member 12 are spaced apart, and the bearing member 12 is deeper into the mounting space A than the flange 142.

The bearing member 12 is deeper into the mounting space A than the flange 142, so the bearing member 12 is not limited by the mounting of the battery pack 100 relative to the apparatus body 10, and can be deeper into the mounting space A, thereby avoiding heat dissipation.

Optionally, one side of the apparatus body 10 has a mounting opening 15 communicating with the mounting space A, the battery pack 100 is mounted in the mounting space A through the mounting opening 15, and the flange 142 is connected to the apparatus body 10 at an edge of the mounting opening 15.

Further, the apparatus body 10 further has a connecting space D. The connecting space D communicates with the mounting space A through the mounting opening 15 to form a stepped groove, and the flange 142 is connected to a groove wall of the stepped groove.

In this way, the flange 142 can be hidden in the connecting space D, thereby avoiding damage.

Optionally, the flange 142 is distributed on at least two opposite sides of the frame 14. Specifically, the flange 142 is arranged around the entire periphery of the frame 14.

According to some embodiments of this application, referring to FIG. 3 and FIG. 4, at least a portion of the bottom cover 13 is disposed outside the mounting space A.

A portion of the bottom cover 13 being disposed outside the mounting space A can facilitate subsequent maintenance and disassembly of the battery pack 100, making maintenance more convenient.

According to some embodiments of this application, referring to FIG. 3 and FIG. 4, the apparatus body 10 is a vehicle body of the vehicle 1000, the vehicle body includes a floor 400 for defining the mounting space A, and the thermal insulation layer 220 is provided between the bearing member 12 and the floor 400.

The battery pack 100 being mounted on the lower side of the floor 400 of the vehicle body and the thermal insulation layer 220 being provided between the bearing member 12 and the floor 400 can prevent heat of the bearing member 12 from dissipating from the bottommost portion of the vehicle body.

According to some embodiments of this application, referring to FIG. 3 and FIG. 4, the vehicle 1000 has an air conditioning system, the air conditioning system being configured to provide a refrigerant for the thermal insulation layer 220.

Specifically, the refrigerant is a type of the heat exchange medium.

The refrigerant is used for thermal insulation of the bearing member 12. The refrigerant can heat or cool the bearing member 12, so temperature of the battery pack 100 can be adjusted by heating or cooling the bearing member 12 to achieve the thermal insulation effect. In addition, this improves the energy utilization efficiency of the refrigerant, and allows the battery pack 100 to operate at an appropriate temperature, ensuring its use performance and prolonging its service life.

According to some embodiments of this application, referring to FIG. 3 and FIG. 4, the vehicle body further includes a first beam body 500 and a second beam body 600 disposed opposite and spaced apart from each other, and the first beam body 500 and the second beam body 600 are disposed on one side of the floor 400 and enclose the mounting space A together with the floor 400.

Due to high structural strength, the first beam body 500 and the second beam body 600 can withstand an external force, thereby avoiding damage to the battery pack 100.

Optionally, both the first beam body 500 and the second beam body 600 are longitudinal beams of the chassis of the vehicle body, which are not specifically limited.

Optionally, the flange 142 is connected to the first beam body 500 and the second beam body 600.

According to some embodiments of this application, referring to FIG. 3 and FIG. 4, this application provides a vehicle 1000, including a vehicle body and a battery pack 100. The vehicle body includes a floor 400, and a first beam body 500 and a second beam body 600 disposed opposite and spaced apart from each other. The first beam body 500 and the second beam body 600 are disposed on one side of the floor 400 and enclose a mounting space A together with the floor 400, and the battery pack 100 is mounted in the mounting space A. The battery pack 100 includes a box 10 and a battery cell 20. The box 10 includes a bearing member 12, a bottom cover 13, and a frame 14. The frame 14 encloses a cavity with two ends open, the bottom cover 13 and the bearing member 12 cover the two opposite ends of the cavity respectively, and the bottom cover 13, the frame 14, and the bearing member 12 together enclose an accommodating cavity 11. The frame 14 includes a frame body 141 and a flange 142, the frame body 141 encloses the cavity, and the flange 142 is connected to two opposite sides of the frame body 141 and connected to the first beam body 500 and the second beam body 600. One side of the bearing member 12 is configured to suspend the battery cell 20, and the other side of the bearing member 12 back away from the side faces the inside of the mounting space A and is spaced apart from an inner wall of the mounting space A to form a closed first thermal insulation space. Gas is sealed in the first thermal insulation space. The thermal insulation layer 220 further includes a first thermal insulation material layer 221 disposed in the first thermal insulation space. The first thermal insulation material layer 221 is connected to a side of the bearing member 12 back away from the battery cell 20. An outer surface of the battery cell 20 facing the bearing member 12 is a first outer surface 212, the battery cell 20 further has a second outer surface 213 back away from the first outer surface 212, and an electrode terminal 211 is arranged on the second outer surface 213. The second surface 213 is spaced apart from an inner wall of the accommodating cavity 11 to form a second thermal insulation space B. Gas is sealed in the second thermal insulation space B. The battery cell 20 further has a third outer surface 213 adjacent to the first outer surface 212, and at least a portion of the third outer surface 213 is spaced apart from a corresponding inner wall of the box 10 to form a third thermal insulation space C. Gas is sealed in the third thermal insulation space C.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electric apparatus, comprising:
an apparatus body having a mounting space; and
a battery pack mounted in the mounting space, wherein the battery pack comprises a box and a battery cell, and the box has an accommodating cavity for accommodating the battery cell and comprises a bearing member for defining the accommodating cavity;
wherein one side of the bearing member is configured to be connected to the battery cell, and the other side of the bearing member back away from the side faces the inside of the mounting space and a thermal insulation layer is provided between the other side and an inner wall of the mounting space.

2. The electric apparatus according to claim 1, wherein the battery cell is suspended from the bearing member.

3. The electric apparatus according to claim 1 or 2, wherein an outer surface of the battery cell facing the bearing member is a first outer surface, and the battery cell comprises an electrode terminal, the electrode terminal being arranged on an outer surface of the battery cell other than the first outer surface.

4. The electric apparatus according to claim 3, wherein the battery cell has a second outer surface back away from the first outer surface, and the electrode terminal is arranged on the second outer surface.

5. The electric apparatus according to any one of claims 1 to 4, wherein the battery cell is adhered to the bearing member.

6. The electric apparatus according to any one of claims 1 to 5, wherein the thermal insulation layer comprises a closed first thermal insulation space enclosed by the bearing member and the inner wall of the mounting space.

7. The electric apparatus according to claim 6, wherein gas is sealed in the first thermal insulation space.

8. The electric apparatus according to claim 1, wherein the thermal insulation layer comprises an open first thermal insulation space enclosed by the bearing member and the inner wall of the mounting space, and a heat exchange medium circulates in the first thermal insulation space.

9. The vehicle chassis according to any one of claims 1 to 8, wherein the thermal insulation layer comprises a first thermal insulation material layer.

10. The electric apparatus according to any one of claims 1 to 9, wherein a side of the battery cell back away from the bearing member is spaced apart from a corresponding inner wall of the accommodating cavity to form a second thermal insulation space.

11. The electric apparatus according to claim 10, wherein gas is sealed in the second thermal insulation space, and/or
a second thermal insulation material layer is provided in the second thermal insulation space.

12. The electric apparatus according to any one of claims 1 to 11, wherein an outer surface of the battery cell facing the bearing member is a first outer surface, the battery cell further has a third outer surface adjacent to the first outer surface, and at least a portion of the third outer surface is spaced apart from a corresponding inner wall of the box to form a third thermal insulation space.

13. The electric apparatus according to claim 12, wherein gas is sealed in the third thermal insulation space, and/or
a third thermal insulation material layer is provided in the third thermal insulation space.

14. The electric apparatus according to any one of claims 1 to 13, wherein the box comprises a bottom cover and a frame, the frame encloses a cavity with two ends open, the bottom cover and the bearing member cover the two opposite ends of the cavity respectively, and the bottom cover, the frame, and the bearing member together enclose the accommodating cavity.

15. The electric apparatus according to claim 14, wherein the frame comprises a frame body and a flange, the frame body encloses the cavity, and the flange is connected to the periphery of the frame body and connected to the apparatus body.

16. The electric apparatus according to claim 15, wherein in an axial direction parallel to the frame, the flange and the bearing member are spaced apart, and the bearing member is deeper into the accommodating space than the flange.

17. The electric apparatus according to claim 14, wherein at least a portion of the bottom cover is disposed outside the mounting space.

18. The electric apparatus according to any one of claims 1 to 17, wherein the electric apparatus is a vehicle, the apparatus body is a vehicle body of the vehicle, the vehicle body comprises a floor for defining the mounting space, and the thermal insulation layer is provided between the bearing member and the floor.

19. The electric apparatus according to claim 18, wherein the vehicle has an air conditioning system, the air conditioning system being configured to provide a refrigerant for the thermal insulation layer.

20. The electric apparatus according to claim 18, wherein the vehicle body further comprises a first beam body and a second beam body disposed opposite and spaced apart from each other, and the first beam body and the second beam body are disposed on one side of the floor and enclose the mounting space together with the floor.
